## Europäisches Patentamt

## European Patent Office

## Office européen des brevets

(11) Veröffentlichungsnummer: **0 023 620**
**B1**

(12) **EUROPÄISCHE PATENTSCHRIFT**

(45) Veröffentlichungstag der Patentschrift:
28.09.83

(51) Int. Cl.³: **B 60 R 1/06**

(21) Anmeldenummer: **80104084.1**

(22) Anmeldetag: **15.07.80**

---

(54) **Klappscharnier für Aussenrückblickspiegel.**

---

(30) Priorität: **04.08.79 DE 7922313 U**

(43) Veröffentlichungstag der Anmeldung:
**11.02.81 Patentblatt 81/6**

(45) Bekanntmachung des Hinweises auf die Patenterteilung:
**28.09.83 Patentblatt 83/39**

(84) Benannte Vertragsstaaten:
**DE**

(56) Entgegenhaltungen:
**DE-A-2 256 230**
**DE-A-2 744 708**
**DE-U-7 922 313**

(73) Patentinhaber: **Metallwerk FRESE GmbH,
Moltkestrasse 25, D-5653 Leichlingen (DE)**

(72) Erfinder: **Reif, Friedhelm, Sperberstrasse 16,
D-5653 Leichlingen 1 (DE)**
Erfinder: **Wild, Dietmar, Ziegwebersberg 4,
D-5653 Leichlingen 1 (DE)**

(74) Vertreter: **Gille, Christian, Dipl.-Ing. et al, Redies,
Redies, Türk & Gille Bruckner Strasse 20,
D-4000 Düsseldorf 13 (DE)**

---

## Klappscharnier für Außenrückblickspiegel

Die Erfindung betrifft ein Klappscharnier für Außenrückblickspiegel, das zwei im Abstand parallel nebeneinander liegende Schwenkachsen aufweist, von denen die eine an einem am Fahrzeug zu befestigenden Spiegelfuß und die andere am Spiegelgehäuse festgelegt und jede Achse über einen Schnappverschluß lösbar mit dem jeweils anderen Spiegelteil derart zu verbinden ist, daß das Spiegelgehäuse nach vorne oder hinten abschwenken kann, wenn auf dasselbe ein einen Schwellenwert übersteigender Druck oder Stoß ausgeübt wird.

Bei Kraftfahrzeugen ist es üblich, immer größere Außenrückblickspiegel zu verwenden, wobei die eigentliche Spiegelscheibe in einem gegenüber der Fahrzeugkarosserie unbewegbar angebrachten Gehäuse sitzt und normalerweise gegenüber diesem Gehäuse verstellt werden kann. Um jedoch zu verhindern, daß das verhältnismäßig weit über die Karosserie überstehende Gehäuse eines derartigen Außenrückblickspiegels bei Unfällen größere Verletzungen hervorrufen kann oder beim Auftreffen auf einem festen Widerstand, beispielsweise in einer automatischen Waschanlage, Beschädigungen hervorruft, besteht die Forderung, daß das eigentlich unbewegbar an der Karosserie angebrachte Spiegelgehäuse sowohl nach vorne als auch nach hinten abschwenken und sich somit mehr oder weniger parallel zur Karosserie stellen kann, wenn auf das Spiegelgehäuse ein einen bestimmten Mindestwert übersteigender Druck oder Stoß ausgeübt wird.

Um diese Forderungen zu erfüllen, ist es bekannt, zwischen dem Spiegelfuß und dem Spiegelgehäuse ein diese beiden Teile normalerweise starr verbindendes, unter höherem Druck jedoch gegeneinander verschwenkendes Klappscharnier mit zwei parallelen Schwenkachsen anzuordnen, dessen beide Schwenkachsen lösbar mit dem einen bzw. dem anderen Spiegelteil verbunden sind, so daß das Spiegelgehäuse, je nach der Richtung des ausgeübten Stoßes oder Druckes entweder nach vorne oder nach hinten abklappen kann und dadurch Verletzungen ebenso wie Beschädigungen sowohl an außerhalb des Kraftfahrzeuges liegenden Teilen als auch an der Karosserie desselben weitgehend vermieden werden (DE-A-2 256 230 und DE-A1-27 44 708). Die Rückstellung des ausgelenkten Spiegelgehäuses kann von Hand oder auch von einer im Klappscharnier untergebrachten Rückstellfeder erfolgen.

Es hat sich jedoch gezeigt, daß die zu diesem Zweck bekannten Klappscharniere nicht genügend zuverlässig sind, insbesondere nicht in jedem Falle nach einem Auslenken des Spiegelgehäuses wieder zuverlässig in ihre normale Betriebsposition einschnappen. Ein weiterer Nachteil besteht darin, daß durch Fahrbewegungen des Fahrzeuges das Spiegelgehäuse unzulässig stark vibrieren kann.

Der Erfindung liegt die Aufgabe zugrunde, ein Klappscharnier für Außenrückblickspiegel von Fahrzeugen zu schaffen, das bei einfachem Aufbau sehr zuverlässig ist und aus verhältnismäßig kräftigen und damit vibrationshemmenden Teilen hergestellt werden kann und andererseits auch einfach einzubauen ist, so daß sowohl Spiegelfuß als auch Spiegelgehäuse nicht sonderlich geschwächt werden müssen und dementsprechend ebenfalls vibrationshemmend aus Kunststoff und/oder Aluminiumdruckguß geformt werden können.

Zur Lösung dieser Aufgabe wird bei einem Klappscharnier der eingangs genannten Gattung erfindungsgemäß vorgeschlagen, daß der Schnappverschluß wenigstens eine Feder aufweist, die in einen am anderen Spiegelteil festgelegten Haken einrastbar ist. Die beiden Schwenkachsen des erfindungsgemäßen Klappscharniers sind also wechselweise am Spiegelfuß bzw. am Spiegelgehäuse festgelegt und normalerweise mittels wenigstens einer Feder, welche in einen am anderen Spiegelteil festgelegten Haken einrastet, auch gegenüber dem anderen Spiegelteil festgelegt. Wenn jedoch ein Stoß oder Druck auf das Spiegelgehäuse ausgeübt wird, der einen von der Feder bestimmten Mindestwert oder Schwellenwert übersteigt, gibt die Feder so stark nach, daß die der einen Schwenkachse zugeordneten und am anderen Spiegelteil festgelegten Haken ausrasten und das Spiegelgehäuse dementsprechend entweder nach vorne oder nach hinten abklappen kann. Der Schnappverschluß der anderen Schwenkachse wird hingegen nicht gelöst, so daß diese ihre Funktion als Schwenkachse für das teilweise gelöste Spiegelgehäuse erfüllt.

Da der Schnappverschluß Federn aufweist, die in Haken einrasten, ist eine vibrationssichere Verbindung zwischen Spiegelfuß und Spiegelgehäuse gewährleistet, wenn die Schnappverschlüsse des Klappscharniers eingerastet sind. Dabei können sowohl die Federn als auch die Haken einfach und robust ausgebildet und so angeordnet werden, daß weder der Spiegelfuß noch das Spiegelgehäuse für die Montage geschwächt werden müssen, so daß auch diese Teile vibrationssicher gebaut werden können.

Gemäß einer bevorzugten praktischen Ausführungsform der Erfindung weist der Schnappverschluß des Klappscharniers wenigstens zwei Blattfedern mit hakenartig ausgebildetem freien Ende auf, die jeweils eine am anderen Spiegelteil festgelegte Achse hintergreifen können. Die Achse kann dabei ein federnd ausgebildeter Draht oder auch eine mehr oder weniger starre Stange sein, d. h. man kann sowohl die Haken als auch den in dieselben einrastenden Teile federnd ausbilden, obwohl es in vielen Fällen ausreicht, nur den einen der beiden lösbar zusammenwirkenden Teile federnd und den anderen mehr oder weniger starr auszubilden.

Wenn hier von Federn und Haken gesprochen wird, so sind damit lösbar zusammenwirkende Teile gemeint, die unter Federwirkung lösbar ineinander einrasten können. Dabei ist es möglich, nur die Haken federnd und den in sie einrastenden Teil mehr oder weniger starr auszubilden, ebenso wie es möglich ist, die Haken als wenig nachgiebige starre Teile zu formen und dem Gegenstück die notwendigen Federeigenschaften zu verleihen. Wichtig ist, daß die zusammenwirkenden Teile der einzelnen Schnappverschlüsse in der normalen Betriebsstellung mit einer vibrationshemmenden ausreichenden Vorspannung ineinander einrasten und in Notfällen zuverlässig voneinander getrennt werden können, sich aber wieder in ihre normale Betriebsstellung zurückstellen lassen, wenn der Notfall nicht mehr gegeben ist.

Gemäß einer besonders praktischen speziellen Ausführungsform der Erfindung weist der Schnappverschluß wenigstens eine Feder aus Bandstahl auf, die etwa Z-förmig um die beiden parallelen Schwenkachsen gelegt ist und deren beide hakenartig gebogene Enden wechselweise nach der einen und der anderen Seite über dem Scharnierkörper überstehen und somit federnde Haken für die Schnappverschlüsse der beiden parallelen Schwenkachsen bilden. Diese über den Scharnierkörper überstehenden hakenartig gebogenen Enden rasten zweckmäßig in aus Draht gebildeten Achsen ein, von denen eine am Spiegelfuß und die andere am Spiegelgehäuse angebracht ist. Es ist aber auch möglich, aus Bandstahl bestehende federnde Haken am Spiegelgehäuse und/oder am Spiegelfuß anzubringen und mit den Schwenkachsen in diese Haken einrastende Teile wie beispielsweise Drahtstäbe zu verbinden.

Zweckmäßig weisen die hakenartigen Enden der aus Bandstahl bestehenden Federn einen verhältnismäßig flachwinkligen äußeren Abschnitt auf, an dem sich ein scharf abgewinkelter Hakenabschnitt anschließt, so daß diese Haken zwar unter verhältnismäßig geringem Kraftaufwand über das jeweilige Gegenstück geschoben und dasselbe einrastend übergreifen können, zum Lösen dieser Verbindung jedoch eine sehr viel größere Kraft notwendig ist. Dementsprechend kann man das Einrasten unter Umständen sogar mit einer im Klappscharnier vorgesehenen Rückstellfeder bewirken oder mit einer solchen Feder zumindest unterstützen.

Die aus Bandstahl bestehenden Federn können in die Schwenkachsen untereinander verbindende Hebel des Klappscharniers eingelassen sein, so daß sie nur mit ihren hakenartig gebogenen Enden aus diesen Hebeln herausragen und somit keinen zusätzlichen Platz beanspruchen.

Gemäß einer anderen praktischen Ausführungsform der Erfindung weist der Schnappverschluß starre Haken auf, die seitlich auslenkbare Drahtfedern hintergreifen können. Die Haken sind dabei zweckmäßig an die Schwenkachsen untereinander verbindenden Hebeln vorgesehen, während die Drahtfedern Bügel mit zwei parallel zueinander verlaufenden Abschnitten sein können, von denen der eine Abschnitt etwa um den anderen verschwenkbar und von den Haken zu übergreifen ist. Zum Einrasten und Ausrasten wird der verschwenkbare Bügel der Drahtfeder etwa auf einem Kreisbogen bewegt und geht durch einen Totpunkt hindurch, der somit die Rückstellsperre bildet, welche nur unter Einfluß einer einen bestimmten Mindestwert übersteigenden Kraft wie eines Druckes oder Stoßes überwunden wird. In der eingerasteten Position übt die Drahtfeder auf die Haken eine Vorspannung aus, welche Vibrationen zwischen den beiden vom Klappscharnier verbundenen Teilen des Spiegels unterbindet.

Um sicherzustellen, daß der verschwenkbare Abschnitt des Drahtbügels sich bei gelösten Haken stets in der vor dem Totpunkt liegenden Lage befindet und die Haken dementsprechend beim Zurückstellen des abgeklappten Spiegelgehäuses sicher diesen Abschnitt ergreifen und einrasten können, ist gemäß einem weiteren Merkmal der Erfindung für jeden Drahtbügel wenigstens eine seinen verschwenkbaren Abschnitt bei gelösten Haken in der oberen Lage haltende Nase vorgesehen, über die dieser Abschnitt des Drahtbügels von den Haken hinweggedrückt wird, wenn beim Verriegeln der Totpunkt dieses Schnappverschlusses überschritten wird.

Es ist erkennbar, daß das erfindungsgemäße Klappscharnier aus einfachen Teilen aufgebaut sein kann, die in der gegenseitig eingerasteten normalen Betriebsposition unter Vorspannung aneinander gehalten sind, so daß die beiden Teile des Außenrückblickspiegels praktisch starr untereinander verbunden sind und das Spiegelgehäuse dementsprechend nicht aufgrund von Fahrbewegungen des Fahrzeuges vibrieren kann.

In der Zeichnung sind zwei Ausführungsbeispiele des erfindungsgemäßen Scharniers, das in einen Außenrückblickspiegel für Kraftfahrzeuge mit einem an der Fahrzeugkarosserie zu befestigenden Spiegelfuß und einem dem gegenüber in Notfällen verschwenkbaren Spiegelgehäuse eingebaut ist, schematisch dargestellt, und zwar zeigt

Fig. 1 einen senkrechten Schnitt durch den Rückblickspiegel im Bereich des Klappscharniers, wobei sich das Spiegelgehäuse in seiner normalen Position befindet,

Fig. 2 einen Schnitt wie in Fig. 1, wobei jedoch die am Spiegelgehäuse festgelegte Schwenkachse des Klappscharniers vom Spiegelfuß gelöst ist und das Spiegelgehäuse dementsprechend um die andere Schwenkachse nach vorne, d. h. in Fahrtrichtung des nicht dargestellten Fahrzeuges wegschwenken kann, und

Fig. 3 eine Draufsicht auf das Klappscharnier und die mit den federnden Haken zusammenwirkenden Stangen.

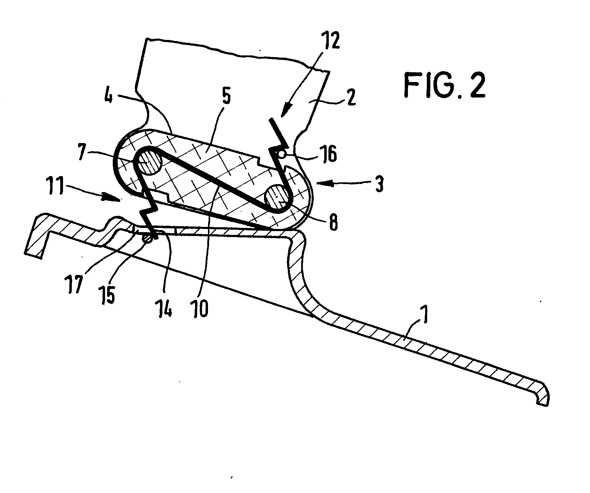

Zwischen dem an einer Karosserie eines nicht dargestellten Fahrzeuges zu befestigenden Spiegelfuß 1 und einem zur Aufnahme einer zweckmäßig verstellbaren, ebenfalls nicht dargestellten Spiegelscheibe dienenden Spiegelgehäuse 2 ist ein erfindungsgemäßes Klappscharnier 3 angeordnet, das das Spiegelgehäuse 2 normalerweise starr mit dem Spiegelfuß 1 verbindet, jedoch ein Abschwenken des Spiegelgehäuses 2 nach vorne (vergleiche Fig. 2) oder nach hinten ermöglicht, wenn auf das Spiegelgehäuse eine einen bestimmten Schwellenwert übersteigende Kraft wie ein plötzlicher Stoß ausgeübt wird.

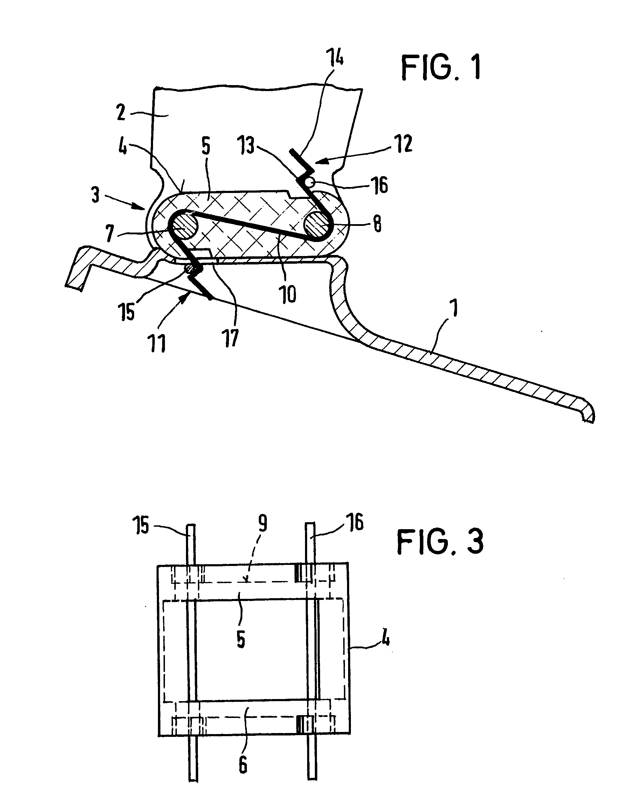

Beim Ausführungsbeispiel gemäß Fig. 1 bis 3 weist das Scharnier 3 einen Scharnierkörper 4 mit zwei starr untereinander verbundenen und parallel zueinander verlaufenden Hebeln 5 und 6 auf, zwischen denen sich parallele Achsen 7 und 8 erstrecken, die als Schwenkachsen anzusehen sind. In die Hebel 5 und 6 sind in schlitzartige Ausnehmungen 9 aus federndem Bandstahl bestehende Federn 10 eingelassen, die sich etwa Z-förmig um die beiden Achsen 7 und 8 legen und deren aus den Hebeln 5 und 6 herausragende Enden 11 und 12 hakenartig abgebogen sind. Jedes dieser hakenartig abgebogenen Enden weist einen etwa rechtwinklig zur Ebene des Bandstahls verlaufenden Rastabschnitt 13 und einen verhältnismäßig flachwinklig verlaufenden äußeren Abschnitt 14 auf.

In der normalen Betriebsstellung hintergreift der Rastabschnitt 13 eine im Spiegelfuß befestigte Stange 15 bzw. eine im Spiegelgehäuse 2 befestigte Stange 16.

Wird jedoch auf das Spiegelgehäuse 2 eine Kraft wie beispielsweise ein plötzlicher Stoß ausgeübt, welche die Kraft der Feder 10 übersteigt, löst sich, je nach Richtung der auf das Spiegelgehäuse 2 einwirkenden Kraft, das Ende 11 oder 12 der Feder 10 von der betreffenden Stange 15 bzw. 16, so daß das Klappscharnier 3 um eine der Achsen 7 oder 8 in der einen oder anderen Richtung zusammen mit dem Spiegelgehäuse 2 verschwenken kann. In Fig. 2 ist der Fall dargestellt, daß sich das Ende 11 der Feder 10 von der Stange 15 gelöst hat, so daß das Spiegelgehäuse 2 zusammen mit dem Klappscharnier 3 um die Achse 8 nach vorne wegschwenken kann. Dabei ist auch erkennbar, daß der Abschnitt 14 des Endes 11 der Feder 10 leicht über die unter eine Öffnung 17 des Spiegelfußes 1 angeordnete Stange 15 hinweggleiten kann, was für ein erneutes Einrasten des Endes 11 vorteilhaft ist.

Wird der Stoß oder Druck auf das Spiegelgehäuse 2 in entgegengesetzter Richtung ausgeübt, so löst sich dementsprechend das Ende 12 der Feder 10 von der Stange 16 und das Klappscharnier 3 kann mit dem Spiegelgehäuse 2 um die Achse 7 nach hinten verschwenken.

Bei der Ausführungsform gemäß Fig. 1 bis 3 wirken aus Metall bestehende Teile, nämlich die Blattfedern 10 und die Stangen 15 und 16 miteinander zusammen, so daß sich praktisch kein Verschleiß ergibt.

**Patentansprüche**

1. Klappscharnier für Außenrückblickspiegel, mit zwei im Abstand parallel nebeneinander liegenden Schwenkachsen (7, 8), von denen die eine an einem am Fahrzeug zu befestigenden Spiegelfuß (1) und die andere am Spiegelgehäuse (2) festgelegt und über einen Schnappverschluß lösbar mit dem jeweils anderen Spiegelteil derart zu verbinden ist, daß das Spiegelgehäuse (2) nach vorne oder hinten abschwenken kann, wenn auf dasselbe ein einen Schwellenwert übersteigender Druck oder Stoß ausgeübt wird, dadurch gekennzeichnet, daß der Schnappverschluß wenigstens eine Feder (10) aufweist, die in einen am anderen Spiegelteil (1 bzw. 2) festgelegten Haken (15, 16) einrastbar ist.

2. Klappscharnier nach Anspruch 1, dadurch gekennzeichnet, daß der Schnappverschluß wenigstens zwei Blattfedern (10) mit hakenartig ausgebildetem freien Ende (11 bzw. 12) aufweist, die jeweils eine am anderen Spiegelteil (1 bzw. 2) festgelegte Achse (15, 16) hintergreifen können.

3. Klappscharnier nach Anspruch 2, dadurch gekennzeichnet, daß die Achse (15, 16) ein federnd ausgebildeter Draht oder eine mehr oder weniger starre Stange ist.

4. Klappscharnier nach einem der Ansprüche 1 bis 3, dadurch gekennzeichnet, daß der Schnappverschluß wenigstens eine Feder (10) aus Bandstahl aufweist, die etwa Z-förmig um die beiden parallelen Schwenkachsen (7, 8) gelegt ist und deren beide hakenartig gebogene Enden (11, 12) wechselweise nach der einen und der anderen Seite über den Scharnierkörper (4) überstehen.

5. Klappscharnier nach einem der Ansprüche 1 bis 4, dadurch gekennzeichnet, daß die hakenartigen Enden (11, 12) der Federn (10) einen verhältnismäßig flachwinkligen äußeren Abschnitt (14) aufweisen.

6. Klappscharnier nach einem der Ansprüche 1 bis 5, dadurch gekennzeichnet, daß die Federn (10) in die Schwenkachsen (7, 8) untereinander verbindende Hebel (5, 6) eingelassen sind.

**Claims**

1. Folding hinge for external rear view mirror comprising a pair of parallely spaced adjacent swivel axes (7, 8), one of which is secured to a mirror support (1) to be fixed at a vehicle, while the other is secured to a mirror casing (2) and releasably connected to the other mirror portion by means of a snap catch in a way permitting the mirror casing (2) to tilt forward or backward when a pressure or shock exceeding a certain limit value is applied thereon, characterized in that the snap catch comprises at least one spring (10) engageable in a hook (15, 16) provided at the other mirror portion (1, 2).

2. Folding hinge as defined in claim 1, characterized in that the snap catch is provided at least with two leaf springs (10) comprising hooked free ends (11 or 12) each engaging an axis (15, 16) secured to the other mirro portion (1 or 2).

3. Folding hinge as defined in claim 2, characterized in that axis (15, 16) consists of a resilient wire or a more or less rigid rod.

4. Folding hinge as defined in either of claims 1 to 3, characterized in that the snap catch comprises at least one spring (10) made of strip steel arranged in the form of a Z around both parallel swivel axes (7, 8), both hook-like ends (11, 12) of which alternatively extend to one side or the other over the hinge body (4).

5. Folding hinge as defined in either of claims 1 to 4, characterized in that the hook-like ends (11, 12) of springs (10) are provided with a relatively flat-angled outer section (14).

6. Folding hinge as defined in either of claims 1 to 5, characterized in that springs (10) are encased in levers (5, 6) interconnecting swivel axes (7, 8).

**Revendications**

1. Charnière rabattable pour rétroviseur extérieur comprenant deux axes pivotants parallèles (7, 8) arrangés espacés l'un de l'autre, dont l'un est attaché à un pied de rétroviseur (1) à fixer sur un véhicule, tandis que l'autre axe est fixé au boîtier du rétroviseur (2) et connecté par un verrou à déclic débrayable de telle sorte à l'autre partie du rétrovisuer (2) que le boîtier de rétroviseur (2) peut se rabattre vers l'avant ou l'arrière dès qu'une pression ou un choc dépassant une valeur seuil est excercé sur ce dernier, caractérisé en ce que le verrou à déclic comprend au moins un ressort (10) pouvant s'enclencher dans un crochet (15, 16) prévu sur l'autre partie du rétroviseur.

2. Charnière rabattable suivant la revendication 1, caracterisé en ce que le verrou à déclic comprend au moins deux ressorts à lames (10) à extrémités libres (11 ou 12) formant crochet et pouvant enclencher un bras (15, 16) prévu sur l'autre partie du rétroviseur (1 ou 2).

3. Charnière rabattable suivant la revendication 2, caracterisé en ce que le bras (15, 16) est un fil de fer élastique ou une barre plus ou moins rigide.

4. Charnière rabattable suivant l'une des revendications 1 à 3, caractérisé en ce que le verrou à déclic comprend au moins un ressort (10) réalisé en acier feuillard et arrangé en forme de Z autour des axes pivotants (7, 8) et dont les extrémités crochues (11, 12) s'étendent alternativement de part et d'autre sur le corps de charnière (4).

5. Charnière rabattable suivant l'une des revendications 1 à 4, caractérisé en ce que les extrémités crochues (11, 12) présentent une section extérieure (14) à angle relativement plat.

6. Charnière rabattable suivant l'une des revendications 1 à 5, caractérisé en ce que les ressorts (10) sont encastrés dans des leviers (5, 6) interconnectant les axes pivotants (7, 8).

FIG. 1

FIG. 3

FIG. 2